# EUROPEAN PATENT APPLICATION

(11) **EP 2 355 501 A1**
(43) Date of publication of application: **10.08.2011**
(21) Application number: 11150338.9
(22) Date of filing: 06.01.2011
(51) Int. Cl.: H04N 7/14, G06T 3/60

(54) **Method for transmitting image data & display apparatus and display method using the same**

(30) Priority: 03.02.2010 KR 20100009791
(71) Applicant: Samsung Electronics Co., Ltd., Suwon-si, Gyeonggi-do (KR)
(72) Inventor: Lee, Sung-ju, Gyeonggi-do (KR); You, Kwang-hoon, Gyeonggi-do (KR)
(74) Representative: Bruce, Alexander Richard Henry

(57) **Abstract**

A method for transmitting image data, and a display apparatus and a display method using the same, the display apparatus including a rotatable image output unit and a controlling unit which transmits a photographed image along with information regarding rotation of the image output unit to an external display apparatus. Accordingly, the external display apparatus which receives the image photographed in a rotated state may display the received image properly.

## Description

The present invention relates to a method for transmitting image data and a display apparatus and a display method using the same, and more particularly to a method for transmitting image data in a rotatable display apparatus and a display apparatus and a display method using the same.

Recently, with the development of communication and electronic technology, technologies which had been used by only a small group of people, such as video communication and large-scale data communication, have become more available to the general public regardless of age or sex.

Accordingly, data may be exchanged between any devices regardless of time and place. For example, a picture may be taken using a computer and sent to another device via a wireless network, or a picture may be taken using a mobile device such as a cellular phone and sent to another device.

A picture may be photographed not only by a camera provided in a computer or a cellular phone, but also by an external camera. In addition, devices which have a rotatable display unit such as a liquid crystal display (LCD) with a pivot function have also been introduced. That is, a computer monitor, an LCD of a cellular phone, or a TV screen may be designed to be rotatable, making it more convenient for a user to view an image through them.

However, if an image photographed by a device with pivot function is transmitted to an external display apparatus as is, the external display apparatus may display the received image as if the image has been rotated, since it is difficult for the external display apparatus to recognize whether the image is rotated. Therefore, the user may rotate the display apparatus or the received image again to view the image properly, which causes an inconvenience to the user.

An aspect of one or more exemplary embodiments relates to a method for transmitting image data which enables a display apparatus that receives image data photographed in a rotated state to display the received image data properly, and a display apparatus and a display method using the same.

Another aspect of one or more exemplary embodiments relates to a method for transmitting image data in which image data photographed in a rotated state is transmitted after being rotated again so that the received image data may be displayed properly, and a display apparatus and a display method using the same.

According to an aspect of an exemplary embodiment, there is provided a display apparatus including: an image output unit which is rotatable; a photographing unit which is disposed on the image output unit and which photographs a subject to generate an image; a communication unit which is communicably connected to an external display apparatus; and a controlling unit which transmits the generated image and information regarding rotation of the image output unit to the external display apparatus through the communication unit.

The controlling unit may generate the information regarding rotation of the image output unit and the photographed image in a single file and transmit the generated file to the external display apparatus through the communication unit.

The photographing unit, if the image output unit is rotated, may be rotated in a same direction as the image output unit with respect to a rotation axis of the image output unit.

The controlling unit may rotate an image to be displayed in the image output unit based on the information regarding rotation of the image output unit.

The information regarding rotation may include an angle by which the image output unit is rotated with respect to a rotation axis, and the angle of rotation may be discrete.

The photographing unit may be disposed on an external surface of the image output unit.

The photographing unit may photograph a user looking at the display apparatus or a subject in front of the display apparatus.

The display apparatus may further include an audio input unit which receives an audio signal, and the controlling unit may transmit the input audio to the external display apparatus along with the generated image and the information regarding rotation of the image output unit.

The controlling unit, if the image output unit is rotated, may rotate the generated image in a direction opposite to the direction in which the image output unit is rotated and transmit the rotated image to the external display apparatus through the communication unit.

According to an aspect of another exemplary embodiment, there is provided a method for transmitting data, the method including: photographing, by a photographing unit disposed on an image output unit of a display apparatus, a subject; extracting information regarding rotation of the image output unit; and transmitting the information regarding rotation and the photographed image to an external display apparatus.

The transmitting may generate the information regarding rotation and the photographed image in a single file and transmit the generated file to an external display apparatus.

The information regarding rotation may include an angle by which the image output unit is rotated with respect to a rotation axis, and the angle of rotation may be discrete.

The transmitting, if the image output unit is rotated, may rotate the photographed image in a direction opposite to a direction by which the image output unit is rotated and transmit the rotated image to the external display apparatus.

According to an aspect of another exemplary embodiment, there is provided a display apparatus including: an image output unit which outputs image data; a reception unit which receives information regarding rotation and image data; and a controlling unit which rotates the received image data based on the received information regarding rotation and displays the rotated image data on the image output unit.

The controlling unit may rotate the image data based on the received information regarding rotation and information regarding rotation of the image output unit.

The controlling unit, if the received information regarding rotation is identical to the information regarding rotation of the image output unit, may not rotate the received image data and display the image data as received.

The received information regarding rotation may be information regarding rotation of a display unit disposed on an external display apparatus which generates the image data.

The received information regarding rotation may include an angle by which the display unit disposed on the external display apparatus which generates the image data is rotated, and the angle of rotation may be discrete.

According to an aspect of another exemplary embodiment, there is provided a display method including: receiving information of rotation and image data; and rotating the received image data based on the received information regarding rotation and displaying the rotated image data.

The display method may further include extracting information regarding rotation of a second image output unit disposed on a display apparatus which receives the image data, and the rotating may rotate the received image data based on the received information regarding rotation and the information regarding rotation of the second image output unit.

The displaying may not rotate the received image data and display the image data as received if the received information regarding rotation is identical to the information regarding rotation of the second image output unit.
FIG. 1 is a block diagram illustrating a structure of a display apparatus according to an exemplary embodiment;
FIGs. 2A and 2B are views provided to explain a display according to an exemplary embodiment;
FIGs. 3A and 3B are views provided to explain a display according to an exemplary embodiment;
FIGs. 4A and 4B are views provided to explain a display according to another exemplary embodiment;
FIGs. 5A and 5B are views provided to explain a mobile device according to an exemplary embodiment;
FIG. 6 is a flow chart illustrating a method for transmitting data and a display method according to an exemplary embodiment; and
FIG. 7 is a flow chart illustrating a method for transmitting data according to another exemplary embodiment.

Certain exemplary embodiments are described in greater detail with reference to the accompanying drawings. In the following description, like drawing reference numerals are used for like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail. Expressions such as "at least one of," when preceding a list of elements, modify the entire list of elements and do not modify the individual elements of the list.

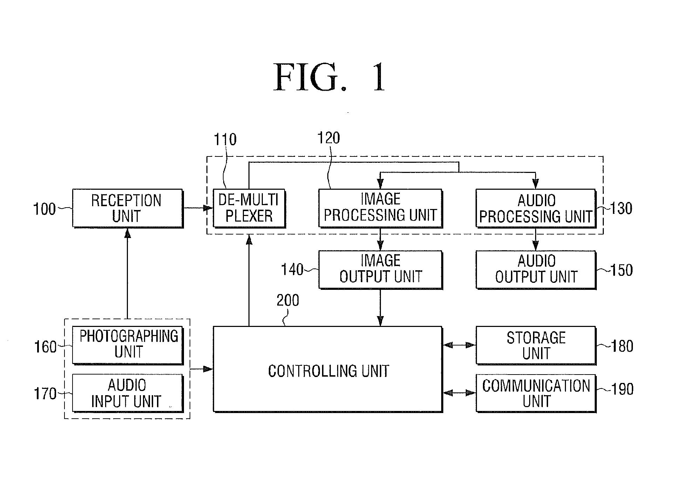

FIG. 1 is a block diagram illustrating a structure of a display apparatus according to an exemplary embodiment. As illustrated in FIG. 1, the display apparatus includes a reception unit 100, a de-multiplexer 110, an image processing unit 120, an audio processing unit 130, an image output unit 140, an audio output unit 150, a photographing unit 160, an audio input unit 170, a storage unit 180, a communication unit 190, and a controlling unit 200.

The reception unit 100 receives data from an external source. Additionally, the reception unit 100 receives at least one of an image photographed by the photographing unit 160 in the display apparatus or by an external photographing apparatus (not shown), and an audio input through the audio input unit 170 in the display apparatus or an external microphone (not shown).

The de-multiplexer 110 divides signals if data received by the reception unit 100 includes an image signal, an audio signal and other signals. The image signal divided by the de-multiplexer 110 is provided to the image processing unit 120 and the audio signal divided by the de-multiplexer 110 is provided to the audio processing unit 130.

The image processing unit 120 decodes the received image signal and converts the received image signal into an image signal in a format that can be output. Similarly, the audio processing unit 130 decodes the received audio signal and converts the received audio signal into an audio signal in a format that can be output.

The image output unit 140 outputs the image signal converted by the image processing unit 120. The image output unit 140 in the display apparatus, according to an exemplary embodiment, may rotate on a specific axis. The audio output unit 150 outputs the audio signal converted by the audio processing unit 130.

The photographing unit 160 photographs a subject. According to an exemplary embodiment, the photographing unit 160 may be disposed in the image output unit 140. However, it is understood that another exemplary embodiment is not limited thereto. For example, according to another exemplary embodiment, the photographing unit 160 may be an external apparatus connected to the display apparatus.

The audio input unit 170 receives an audio signal from an external source. The audio input unit 170 may be a microphone formed in the display apparatus or a microphone connected wirelessly or with wire to the display apparatus.

The storage unit 180 stores at least one of data received through the reception unit 100, the image data input through the photographing unit 160, and the audio data input through the audio input unit 170. The communication unit 190 enables transmitting/receiving data to/from an external apparatus.

The controlling unit 200 controls the de-multiplexer 110, the image processing unit 120, and the audio processing unit 130 to process a signal, stores an image signal or an audio signal generated through the photographing unit 160 or the audio input unit 170 in the storage unit 180, and transmits data to an external apparatus through the communication unit 190.

The control unit 200 determines whether the image output unit 140 is rotated, and if the image input through the photographing unit 160 is to be transmitted to an external display apparatus, transmits information regarding rotation to the external apparatus together with the image. Accordingly, the external display apparatus may display the received image taking into consideration whether the image output unit 140 is rotated.

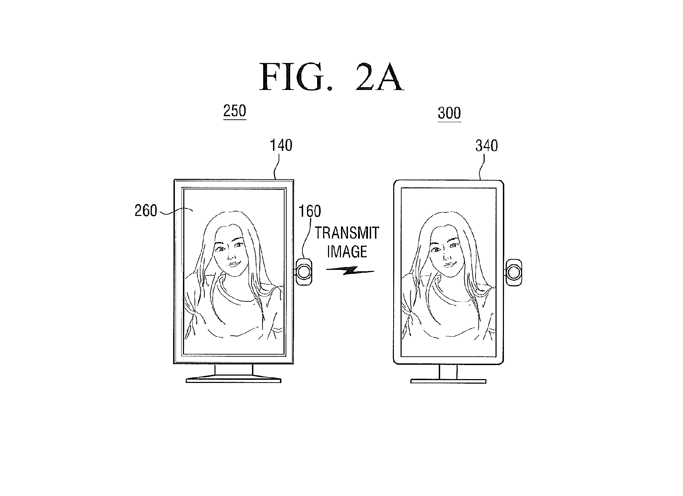

One or more exemplary embodiments may be explained in detail with reference to FIG. 2A to FIG. 3B. According to an exemplary embodiment, the display apparatus includes the rotatable image output unit 140 and the photographing unit 160 as illustrated in FIG. 2A. For convenience of explanation, the display apparatus which photographs an image and transmits the photographed image is referred to as a display for transmission 250 and the display apparatus which receives the transmitted image is referred to as a display for reception 300.

As illustrated in FIG. 2A, when the display for transmission 250 rotates the image output unit 140 by 90 degrees, photographs an image, and transmits the photographed image 260, if the display for reception 300 is also rotated by the same degrees as the image output unit 140 of the display for transmission 250, the received image may be output as is.

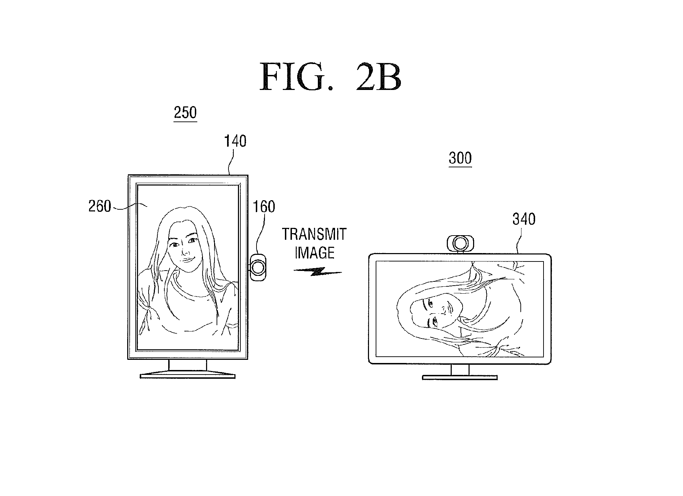

However, if the image output unit of the display for reception 300 is not rotated by the same degree as the display for transmission 250 is rotated, or if the image output unit of the display for reception 300 is rotated by a different degree (e.g. 90 degrees in another direction), a user may have a problem viewing the image since the image is displayed on its side as illustrated in FIG. 2B.

If the information regarding rotation of the image output unit 140 of the display for transmission 250 is transmitted along with the image, the display for reception 300 may recognize that the received image is rotated in the image output unit 140 of the display for transmission 250.

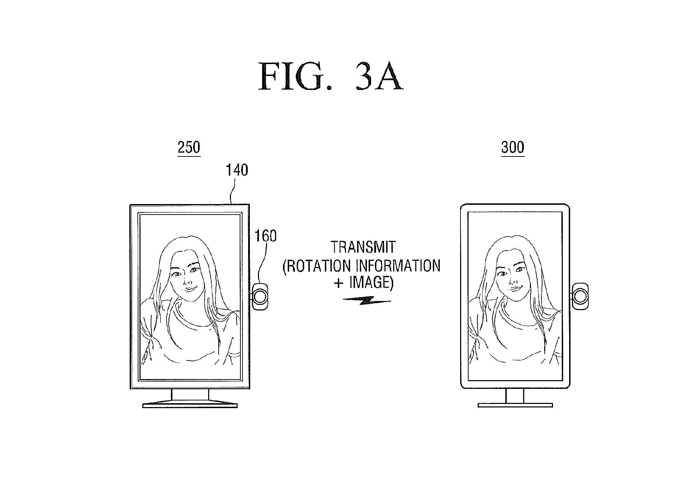

Accordingly, if the display for reception 300 displays a received image and the image output unit 340 of the display for reception 300 is rotated in the same direction as the image output unit 140 of the display for transmission 250, the received image is output as is. FIG. 3A illustrates the display for reception 300 which outputs a received image as is.

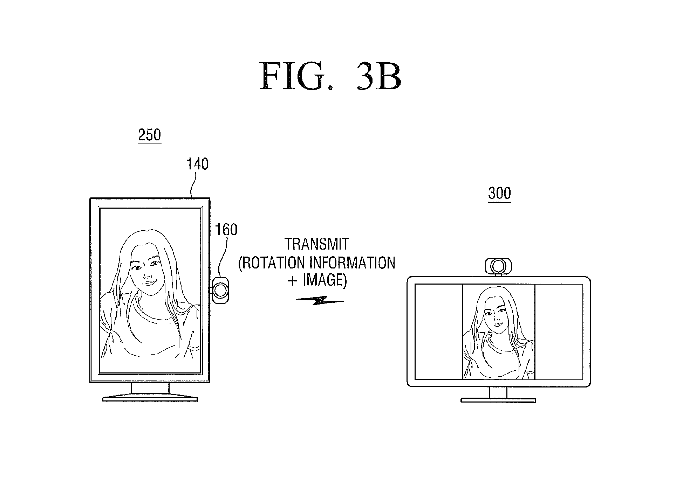

On the other hand, if the display for reception 300 displays a received image and the image output unit 340 of the display for reception 300 is not rotated or is rotated in another direction, the received image is rotated before being displayed so that the received image may be displayed properly. FIG. 3B illustrates the display for reception 300 which displays a rotated image.

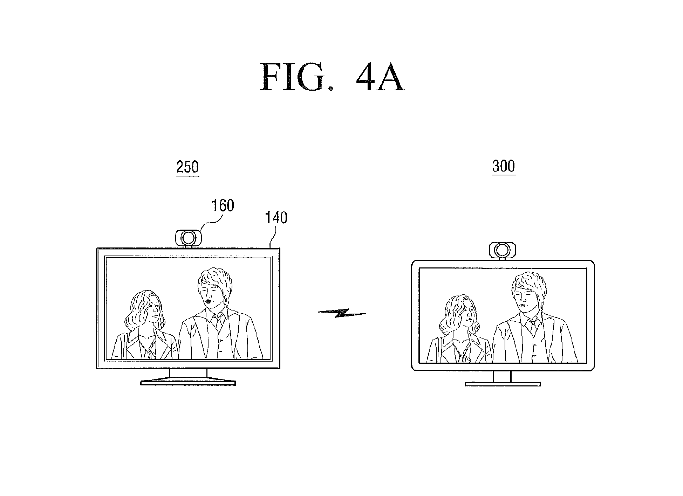

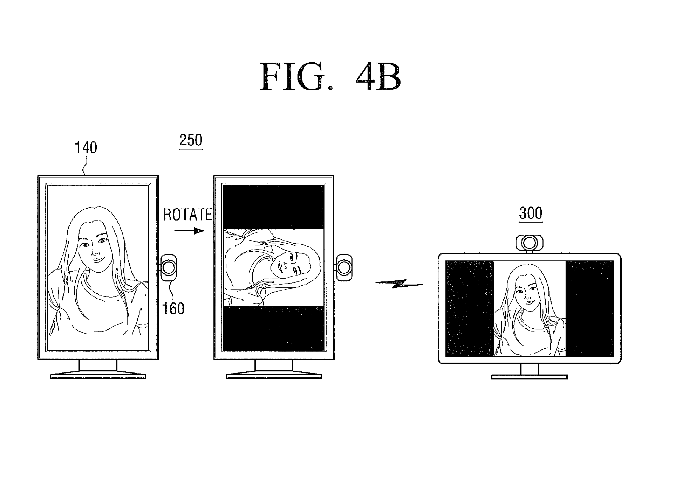

Hereinbelow, another exemplary embodiment will be explained with reference to FIGs. 4A and 4B.

In the above description, the display for reception 300 has a rotation function though it is understood that the display for reception 300 may not have a rotation function in another exemplary embodiment.

As illustrated in FIG. 4A, if the image output unit 140 of the display for transmission 250 with the rotation function transmits an image without rotating the image, whether the display for reception 300 is rotated or not would not be an issue. However, if the image output unit 140 of the display for transmission 250 with the rotation function transmits an image which is photographed in a rotated state, a user may view the image on its side as illustrated in FIG. 2B.

If an image is photographed while the image output unit 140 is rotated, the display for transmission 250 rotates the photographed image before transmitting the image to the display for reception 300 so that a user may not have any problem in displaying the received image. This process is illustrated in FIG. 4B.

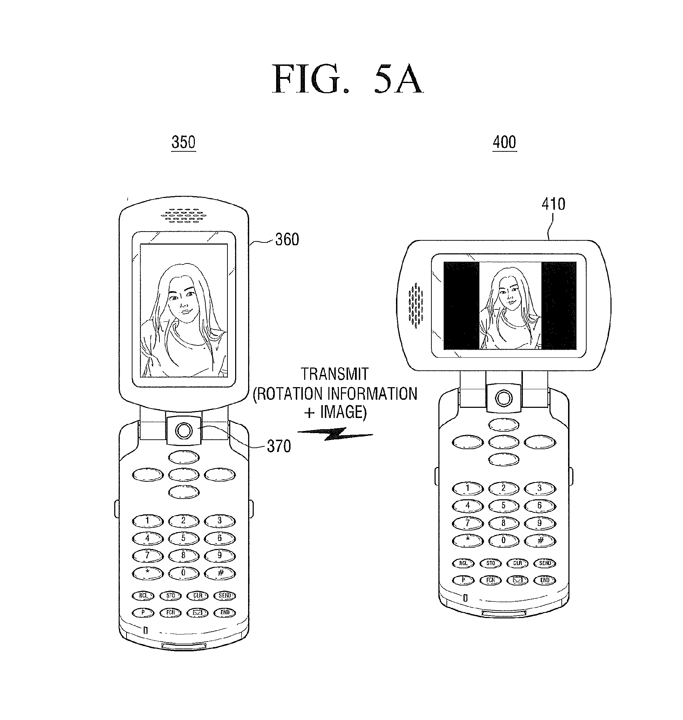

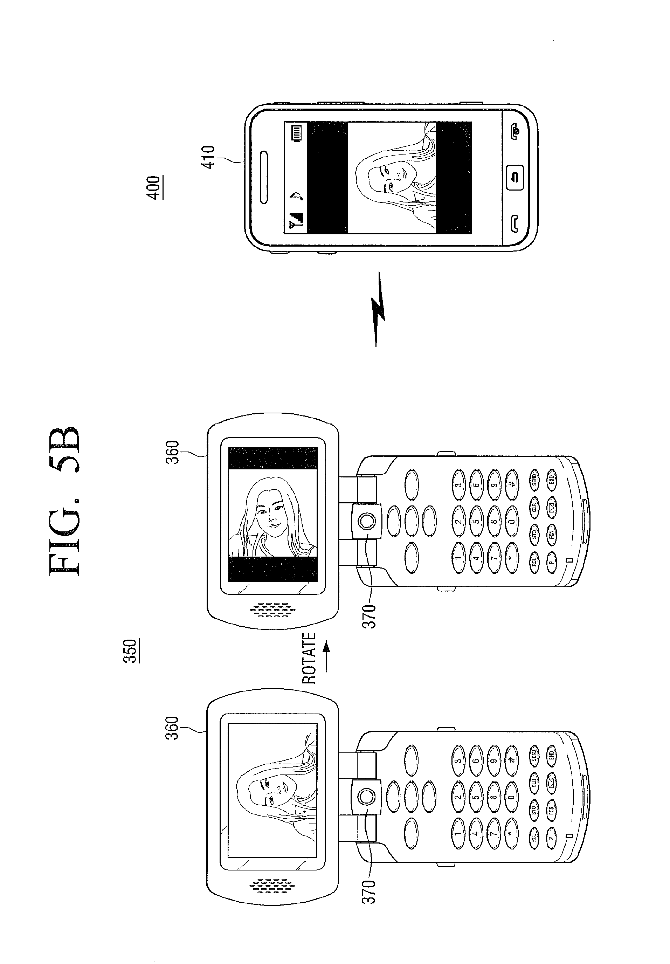

In the above description, the display apparatus is applied to a monitor such as a liquid crystal display (LCD) or a television (TV), but this is only an example. It is understood that aspects may be applied to other mobile devices such as a cellular phone. FIGs. 5A 5B illustrate a mobile device according to an exemplary embodiment. In FIGs. 5A and 5B, a mobile device which transmits an image 360 photographed through a camera 370 disposed in the mobile device is referred to as a mobile for transmission 350 and a mobile device which receives the image is referred to as a mobile for reception 400.

In FIG. 5A, both an LCD unit 360 of the mobile for transmission 350 and the LCD unit 410 of the mobile for reception 400 are rotatable.

If the mobile for transmission 350 photographs an image through the camera 370 and transmits the image and the LCD unit 410 of the mobile for reception 400 is rotated in the same way as the LCD unit 360 of the mobile for transmission 350, the received image may be displayed as is.

However, as illustrated in FIG. 5A, if the LCD unit 410 of the mobile for reception 400 is rotated differently from the LCD unit 360 of the mobile for transmission 350, the above-described problem occurs.

Accordingly, the mobile for transmission 350 also transmits information regarding the rotation of the LCD unit 360 along with the photographed image, and the mobile for reception 400 may therefore display the received image according to the information regarding the rotation.

In FIG. 5B, the LCD unit 360 of the mobile for transmission 350 has a rotation function, but the LCD unit 410 of the mobile for reception 400 does not have the rotation function. In this case, if the mobile for transmission 350 transmits the image which is photographed through the camera 370 while the LCD unit 360 is rotated, the mobile for transmission 350 rotates the photographed image in a direction opposite to the rotation direction of the LCD unit 360 before transmitting the photographed image.

Accordingly, if the mobile for reception 400 displays the received image on the LCD unit 410 as is, the image is displayed properly.

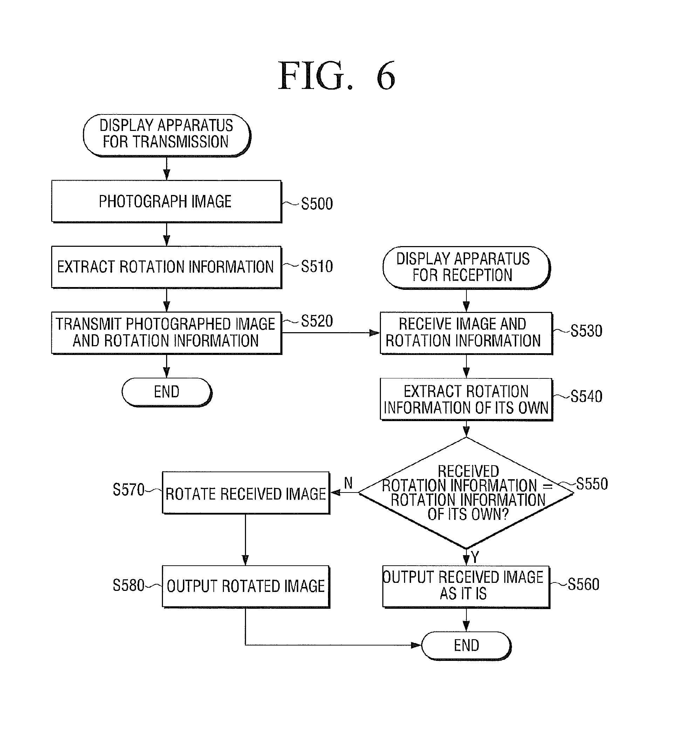

FIG. 6 is a flow chart illustrating a method for transmitting data and a method for displaying the received data according to an exemplary embodiment.

In the present exemplary embodiment, a display apparatus for transmission has a rotatable image output unit and a camera. Since the camera is fixed to a surface of the image output unit, if the image output unit is rotated with respect to one axis, the camera is also rotated with respect to the same axis.

Referring to FIG. 6, the display apparatus for transmission photographs an image (S500) and information regarding rotation of the image output unit is extracted (S510). For example, the information regarding rotation may include an angle by which the image output unit is rotated with respect to a rotation axis and the angle may be a discrete angle. For example, the image output unit may be rotated 90 degrees clockwise or counterclockwise.

The extracted information regarding rotation is transmitted along with the photographed image when the image is transmitted to an external display apparatus for reception (S520).

The display apparatus for reception receives the image and rotation information from the display apparatus for transmission (S530). If the display apparatus for reception also has the rotation function, information regarding rotation is extracted (S540).

If the rotation information of the display apparatus for transmission is the same as the rotation information of the display apparatus for reception (S550-Y), the received image is output as is (S560). For example, the rotation information may include information regarding an angle by which the display unit of the display apparatus for transmission which photographed the image is rotated, and the angle may be a discrete angle.

If the rotation information of the display apparatus for transmission is not the same as the rotation information of the display apparatus for reception (S550-N), the received image is rotated (S570). Specifically, if the display apparatus for transmission is rotated 90 degrees to the right and the display apparatus for reception is not rotated, the display apparatus for reception rotates the received image 90 degrees to the right. Subsequently, the display apparatus for reception outputs the rotated image (S580).

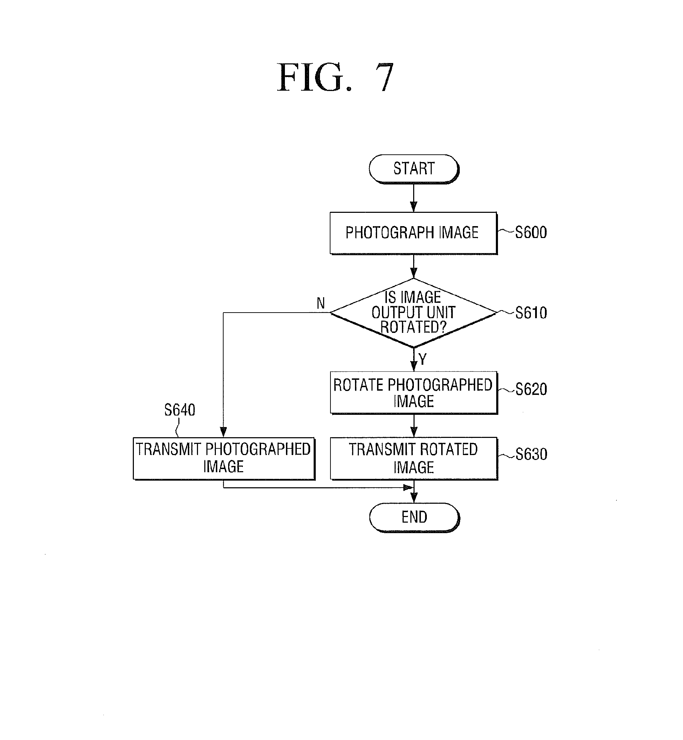

FIG. 7 is a flow chart illustrating a method for transmitting data according to another exemplary embodiment. Referring to FIG. 7, a display apparatus for transmission photographs an image (S600). Whether an image output unit is rotated or not is determined (S610). If the image output unit is not rotated (S610-N), the photographed image is transmitted as is (S640).

However, if the image output unit is rotated (S610-Y), the photographed image is rotated (S620) and the rotated image is transmitted (S630) so that a display apparatus for reception may display the image properly.

According to the above-described exemplary embodiments, image data which is photographed in a rotated state may be displayed properly by a display apparatus which receives the image data. In addition, even if the display apparatus which receives the image data is not rotatable, an environment in which the received image data is displayed properly may be provided.

While not restricted thereto, exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Moreover, while not required in all aspects, one or more units of the display apparatus and the external display apparatus can include a processor or microprocessor executing a computer program stored in a computer-readable medium.

Although a few exemplary embodiments have been shown and described, it would be appreciated by those skilled in the art that changes may be made in an exemplary embodiment without departing from the principles of the inventive concept, the scope of which is defined in the claims.

## Claims

1. A display apparatus, comprising:
an image output unit which is rotatable;
a photographing unit which is disposed in the image output unit and photographs a subject;
a communication unit which is communicably connected to an external display apparatus; and
a controlling unit to transmit an image photographed by the photographing unit and information regarding rotation of the image output unit to the external display apparatus through the communication unit.

2. The display apparatus according to claim 1, wherein the controlling unit generates the information regarding rotation of the image output unit and the photographed image in a single file and transmits the generated file to the external display apparatus through the communication unit.

3. The display apparatus according to one of claim 1 and claim 2, wherein the photographing unit, if the image output unit is rotated, is rotated in a same direction as the image output unit with respect to a rotation axis of the image output unit.

4. The display apparatus according to any one of claims 1 to 3, wherein the controlling unit rotates an image to be displayed by the image output unit based on the information regarding rotation of the image output unit.

5. The display apparatus according to any one of claims 1 to 4, wherein the information regarding rotation includes an angle by which the image output unit is rotated with respect to a rotation axis, and the angle of rotation is discrete.

6. The display apparatus according to any one of claims 1 to 5, wherein the photographing unit is disposed on the surface of the image output unit.

7. The display apparatus according to any one of claims 1 to 6, wherein the photographing unit photographs a user looking at the display apparatus or a subject in front of the display apparatus.

8. The display apparatus according to any one of claims 1 to 7, further comprising:
an audio input unit to receive an audio;
wherein the controlling unit transmits the received audio to the external display apparatus along with the image photographed by the photographing unit and the information regarding rotation of the image output unit.

9. The display apparatus according to any one of claims 1 to 8, wherein the controlling unit, if the image output unit is rotated, rotates the image photographed by the photographing unit in a direction opposite to the direction in which the image output unit is rotated and transmits the rotated image to the external display apparatus through the communication unit.

10. A method for transmitting data, comprising:
photographing a subject;
extracting information regarding rotation of a display apparatus comprising a photographing unit for photographing the subject; and
transmitting the information regarding rotation and the photographed image to an external display apparatus.

11. The method according to claim 10, wherein the transmitting generates the information regarding rotation and the photographed image in a single file and transmits the generated file to an external display apparatus.

12. The method according to one of claim 10 and claim 11, wherein the information regarding rotation comprises an angle by which the image output unit is rotated with respect to a rotation axis, and the angle of rotation is discrete.

13. The method according to any one of claims 10 to 12, wherein the transmitting, if the display apparatus is rotated, rotates the photographed image in a direction opposite to the direction by which the image display is rotated and transmits the rotated image to the external display apparatus.
